# EUROPEAN PATENT APPLICATION

(11) **EP 3 782 849 A2**
(43) Date of publication of application: **24.02.2021**
(21) Application number: 20190808.4
(22) Date of filing: 13.08.2020
(51) Int. Cl.: B60L 53/22, B60L 53/63, H02J 3/26, H02M 7/02, H02M 7/66

(54) **A DC CHARGING DEVICE FOR AN ELECTRIC VEHICLE AND FOR PROVIDING POWER MANAGEMENT OF A CONNECTED GRID**

(30) Priority: 13.08.2019 NO 20190978
(71) Applicant: Zaptec IP AS, 4068 Stavanger (NO)
(72) Inventor: Valebjørg, Vegard, N-4353 Klepp Stasjon (NO); Wetteland, Øyvind, N-3118 Tønsberg (NO); Braut, Knut, N-4316 Sandnes (NO)
(74) Representative: Onsagers AS

(57) **Abstract**

A method and power management assembly 10 for providing DC charging or discharging of an Electric Vehicle. The power management assembly is connected to a 3-phase AC power grid and to a DC charging port of the Electric Vehicle. It comprises power converters 20 that can be controlled to load the three phases of the AC grid individually to adjust for varying available capacity on each AC phase and/or unbalanced loads of the AC phases. The power management assembly 10 is a bidirectional charger in that it can also feed power from the battery of the Electric Vehicle to the AC grid and to control the current delivered to each phase individually to compensate for possible unbalanced phase loads.

## Description

### Technical Field

The present invention relates generally to power supply managing systems for electric vehicles. More specifically, it relates to a method and a power managing charging assembly for controlled DC charging and power management of each phase of the charging assembly connected to respective phases of a 3-phase power grid.

### Background

Electric vehicles or hybrid vehicles driven by electric motors are today expected to provide same amount of comfort and driving range as provided by traditional combustion engine vehicles, e.g. spacious interior, quick acceleration, long range, air conditioning, heating facilities, electric defrosters, large electric driven equipment package, etc.

The combination of all these features results in a rapid increase in the consumption of electric power per driven kilometre requiring a large battery capacity which in turn require large amount of electric energy for charging.

An all-electric vehicle is driven only by at least one electric propulsion system receiving energy from a battery. A hybrid vehicle has both a conventional internal combustion engine system and an electric propulsion system, e.g. electric motor. Since a hybrid vehicle is driven by both electric power and fuel, the battery does not need to have large capacity.

A typical battery range of a hybrid vehicle is 50-100km. The time for a complete charging from a normal domestic one-phase power (for example 230 V/10 A) will typically be about 2-5 hours depending on the capacity of the battery.

In an all-electric vehicle however, the battery has large capacity, delivering a range of 400-800km, requiring large amount of energy for being fully charged. The charging period from a normal domestic one-phase power point is slow, typically 10-35 hours.

Power systems for charging Electric Vehicles (EV) also called Electric Vehicle Supply Equipment (EVSE) are used to safely charge or discharge the traction battery of EV's. The EVSE connects the EV to a power source and follows international standards for charging and discharging the EV battery, e.g. IEC 61851-1, -23, -24.

EV's are becoming more and more abundant and battery capacities are increasing. The demand for efficient charging the EV's is increasing as a natural consequence. The additional load on the AC power grid around us is not yet fully realized but there is a need to utilize the available power in the best way possible.

To charge an EV it needs to be connected to a power source through an EVSE that safely can fill the battery in a timely manner. Three types of EVSE's exist today that uses different methods for charging an EV, i.e. AC - Alternating Current, DC - Direct Current and Wireless (WL) charging. Wireless charging of batteries is however currently not as efficient as wired AC or DC charging.

An AC charger uses AC power directly from the AC powerlines available in homes and connects this through a charging port on the EV. The EV is equipped with an on-board charger that converts the AC power to DC power that will charge the battery with DC power.

A DC charger is also normally connected to the AC powerlines (but not necessarily) where the EVSE connects to a DC port on the EV. AC to DC power conversion is then performed in the EVSE instead of inside the car, and thus can be more powerful and mechanically bigger. The EVSE will then charge the EV battery with DC power, normally allowing for faster charging.

A wireless EVSE alternative is also normally connected to the AC grid. The AC to DC conversion is performed in the EVSE where the DC power (modulated on a higher frequency) is connected to an inductive pad. The EV also carries an inductive pad that is positioned over the EVSE's inductive pad and is in this way connected and can charge (or discharge) the battery.

Charging time can be significantly reduced by charging from a 3-phase power supply providing higher charging power, typically 32A in each phase. There are today different 3-phase charging assemblies providing different solutions for charging a battery of a vehicle.

Known 3-phase charging solutions draw same charging power from each phase even though each phase provides different power, e.g. a first phase provides 20A, a second phase provides 18A, and a third phase provides 15A. Since the connected charging power will be the same on each phase, the power load must adjust to the phase with the least power. In said case, all phases will be loaded with 15A. The total available power is therefore not efficiently utilized.

WO-2017109094 A1 (Zaptec IP AS) describes a charging assembly for connection to a 3-phase power line where the charging assembly is an AC charging station (EVSE). The charging assembly can be controlled to select one of three phases so that several such EVSE's can be used to balance the power used on each of the three phases. The purpose is to achieve optimal use of available electrical power when charging an electrical vehicle from one of the phases, i.e. standard 1-phase charging from a 3-phase powerline. The phase that is to be used for charging is selected and connected to. The connected phase is typically the phase currently having the most available power. In this way, several electrical vehicles can be connected to and charged from different phases of the same 3-phase power supply according to available power in each phase.

Many of today's electric vehicles can receive DC power at a considerably higher power level from 3-phase based earthing systems compared to power received from corresponding one-phase outlets. Fast charging via DC power is typically performed with a DC power supply providing a power of 50-100kW.

The present invention relates to a DC based EVSE that is to be connected between a 3-phase AC powerline and an EV, and how to best utilize the power available. It is relevant for both DC and wireless charging and discharging of an EV.

When fully charged, a battery of an EV has a large amount of energy that can be used for powering and driving the EV or it may be fed back to a power grid. Using the battery as a power bank can be profitable for for instance a private household where power can be fed to the power grid serving a house during periods of the day having high power costs. Likewise, the battery can be charged during periods with low power costs.

There is a need for a flexible charging solution and power management assembly adapted for fast DC charging and efficient use of all available power in a 3 -phase power supply. There is also a need for a power management assembly adapted for charging a battery or delivering power from the battery back to a connected power grid according to for instance present electricity pricing.

The present invention presents a new method and DC charging station (EVSE) comprising a charging and power managing assembly for utilizing available power in each phase of a 3-phase AC power supply by individually controlling and converting current drawn from each phase of the AC power grid.

The invention further defines a method and power managing assembly for controlling power delivered to each phase of the AC power grid from an EV battery.

The invention provides an efficient and controlled way of transferring electric power between a 3-phase power supply and a battery of an electric vehicle. The solution is flexible and provides load balancing of a connected 3-phase power grid by adjusting for possible biased loading of each phase by controlling and setting the amount of current drawn from or delivered to each phase of a 3-phase power supply.

The invention comprises an intelligent 3-phase DC charger that can be controlled to load the three phases of an AC power grid independently for smart utilization of present available power in each phase, and for smart discharging of a battery of an EV to feed power back into the grid with independent power delivery to each phase of a 3-phase power grid according to present phase balance. The DC charger provides both unidirectional and bidirectional charging.

### Summary of the invention

The above-identified objects are achieved by a power management system according to main claim 1 and a method according to main claim 8. The invention also concerns a computer program product in accordance with claim 12. Further beneficial features are defined in the dependent claims.

The invention is defined by a power management assembly (EVSE) for connection between a DC charging port of an electric vehicle and a 3-phase AC power grid. The assembly comprises separate controllable power converters connected to each phase of the 3-phase AC power grid and to a common DC terminal for connection to the DC charging port. A control unit is connected to each power converter and the control unit is adapted for setting and controlling current drawn from or delivered to each phase of the AC power grid. Communication means are connected to the control unit enabling remote operation of the control unit.

In one embodiment, each power converter in the power management assembly comprises a controllable current limiting device. By communicating instruction to the control unit, via the communication means, the power converters can be set to an appropriate current limiting value according to for instance how each phase of the 3-phase power supply currently is loaded.

In one embodiment, power converters connected to each phase of the 3-phase AC power grid comprises two or more power converters connected in parallel. In this way, the capacity can be increased according to needs or one may be used as backup if the other fails.

The control unit may comprise an interface adapted for interacting with the power converters. This interface may be a human machine interface for easy access and interaction with the power management assembly. The interface may be a keyboard, touch screen, voice operated etc. For access, thereby allowing interaction and use of the power management system, the interface may be provided with biometrics such as for instance fingerprint sensor. NFC may also be used for giving access, e.g. RFID.

The communication means, for communicating instructions to the control unit, may comprise one or more of WiFi, Ethernet, 4G, 5G, Bluetooth or power line communication (PLC).

The present invention is further defined by a method for controlled DC charging of an electric vehicle and power management for each phase of the charging assembly connected to respective phases of a 3-phase power grid.

The first step of the method is providing a power management assembly comprising a separate power converter for each phase of the 3-phase AC power grid, where each power converter is connected to a control unit and where the control unit is adapted for controlling and setting current drawn from or delivered to each phase of the AC power grid, and where communication means are connected to the control unit for enabling remote operation of the control unit.

The next step is connecting a power converter to each phase of the AC power grid and connecting a power converter to a DC charging port of the electric vehicle, thereby connecting the power management assembly to the battery of the electric vehicle via its safety controlling devices. The power converter connected to each phase may comprise two or more power converters that are individually controlled.

The next step is establishing present load information of each phase of the 3-phase AC power grid and using this information for controlling each power converter by means of the control unit generating control instructions to each power converter for adjusting current drawn from or delivered to each phase of the AC power grid.

The present load information of the connected phase of the 3-phase AC power supply can be established in different ways.

One way is letting the control unit connected to each phase of the 3-phase AC power grid detect the load on each phase. Based on this, the control unit will generate control instructions for adjusting current drawn from or delivered to each phase of the 3-phase AC power grid.

Another way is to detect load on each phase by external means and communicating this to the control unit and letting the control unit generate control instructions for adjusting current drawn from or delivered to each phase of the 3-phase AC power grid.

In one embodiment, the control instructions for adjusting current drawn from or delivered to each phase of the AC power grid are based on the capacity and present load on each phase of the 3-phase AC power grid. It may further and in addition be based on anticipated energy demands, e.g. three cars will be connected to the same 3-phase power grid between 18:00-21:00 and one of the chargers is of the previous type drawing same amount of current from each phase.

In one embodiment of the invention, the control instructions for adjusting current drawn from or delivered to each phase of the AC power grid comprises instructions for accomplishing load balance of the phases of the 3-phase AC power grid.

The present invention is further defined by a computer program product stored in a memory of the power management assembly. The computer program comprises computer readable instructions that when executed in a processor performs the method described above.

### Brief description of the drawings

Figure 1 is a schematic showing an example with real load for a DC charger according to prior art;
Figure 2 is a schematic showing a power management assembly for DC charging according to the invention;
Figure 3 shows details of a power management assembly according to the invention;
Figure 4 is a schematic showing electric vehicles with power management assemblies according to the invention, where these are connected to same power circuit;
Figure 5 illustrates an example where a prior art DC power assembly is connected to a 3-phase AC power grid and an EV for charging it;
Figure 6 illustrates an example where the DC power assembly according to the invention is connected to a 3-phase AC power grid and an EV for charging it, and
Figure 7 illustrates an example where the DC power management assembly according to the invention is used as a bidirectional charging system.

### Detailed description of the invention

Electric vehicles are now adapted for being connected to both AC- and DC- power supplies. When connected to an AC power supply, an internal converter converts available power from AC to DC. For such systems, the total charging power is restricted to the capacity of the internal AC to DC power converter.

Prior art DC-chargers are controlled by setting same load on each phase of a 3-phase power supply. The load to be set is adapted to the phase having least power. If available power is different on each phase, the total available power is thus not efficiently utilized.

The present invention addresses this problem and will now be described with reference to the figures showing examples of embodiments.

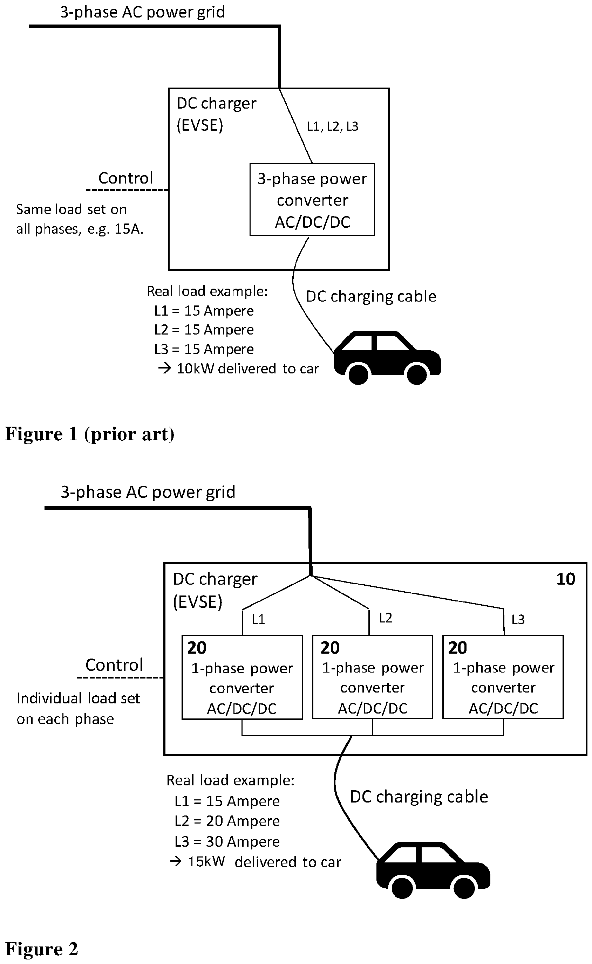

Figure 1 illustrates an example with real load for a DC charger according to prior art. The DC charger comprises a 3-phase power converter for converting 3-phase AC power to DC power. Load set on each phase is the same, i.e. 15A, on each phase. If available power in each phase were e.g. L1= 9A, L2= 15A, L3= 12A, the set load would be 9A for all phases. There is thus no individual control for each phase of the AC power supply, i.e. the set point for AC current drawn from each phase will be the same.

Figure 2 illustrates an example of a power management assembly 10 according to the invention. The power management assembly 10 converts to and from AC and DC, thus has both AC and DC input/output. The power management assembly 10, described as a DC charger (EVSE - Electric Vehicle Supply Equipment) in the figure, is adapted to be connected between an electric vehicle (EV) and a 3-phase AC power grid and provides individual control of power flow to and from each connected phase of the 3-phase power grid.

AC terminals of the power management assembly 10 are connected to a power grid via a 3-phase power cable and DC terminals of power management assembly 10 is connected to a charging cable with a charging plug to be connected to a corresponding socket in the EV. A control device in the EV is connected to the socket and to the traction battery in the EV. The control device provides different safety functions and checking routines that are executed prior to initiating charging or discharging of the battery.

The DC charger according to the invention comprises a power management assembly 10 comprising individually controlled 1-phase power converters 20 connected to each phase of the AC power grid. Set point for each power converter 20 is controlled and set by a control unit.

The figure illustrates an example where the different phases of a 3-phase power supply are loaded differently. The first phase L1 is loaded with 15A, the second phase L2 is loaded with 20A, while the third phase is loaded with 30A and where 15kW is delivered to a car. Each phase of the 3-phase power supply is therefore loaded differently. How much a phase is to be loaded can be based the present load of each phase, capacity of the connected 3-phase AC power grid as well as other parameters.

There are different reasons why a 3-phase power grid has an unbalanced load. One reason may be that only one or two of the phases are connected to equipment drawing power from the connected phases, e.g. 1-phase AC-charger. Another reason may be that connected 3-phase equipment load each phase differently. Unbalanced loading of a 3-phase load is not optimal use of available power. This can however be controlled and adjusted with the power management assembly 10 according to the present invention where loading of each phase can be carefully controlled by separate controllable power converters 20 connected to each phase, i.e. 1-phase power converters.

The separate 1-phase power converters 20 have AC terminals that are connected to each phase L1, L2, L3 of an AC power grid. Each power converter 20 converts power from AC to DC and from DC to AC, thus allowing flow of energy both ways, i.e. from an AC power grid to a battery and vice versa. The DC terminals of each power converter 20 are connected to each other, thus providing a common DC input/output. Each power converter 20 is controlled by a control unit that is adapted for controlling current load of each power converter 20. This means that current drawn from or delivered to each phase of the connected 3 -phase power grid can be adjusted according to present load to achieve load balance.

Current load of a power converter can be adjusted in different ways, e.g. WO 2012/050501 A1. This publication describes a device and method for limiting an electric current in an electrical conductor of an electrical installation. The device comprises a receiving unit adapted to receive a measurement of the electrical current in the electrical conductor and a limiting unit adapted to limit said electrical current when the measured electrical current reaches a threshold. The device comprises a unit adapted to obtain electrical energy from a second electrical conductor, wherein the limiting unit is adapted to inject said obtained electrical energy as an electrical current into the first electrical conductor, whereby the injected electrical current constitutes a replacement for at least a part of the first electrical current, which first electrical current is thereby limited.

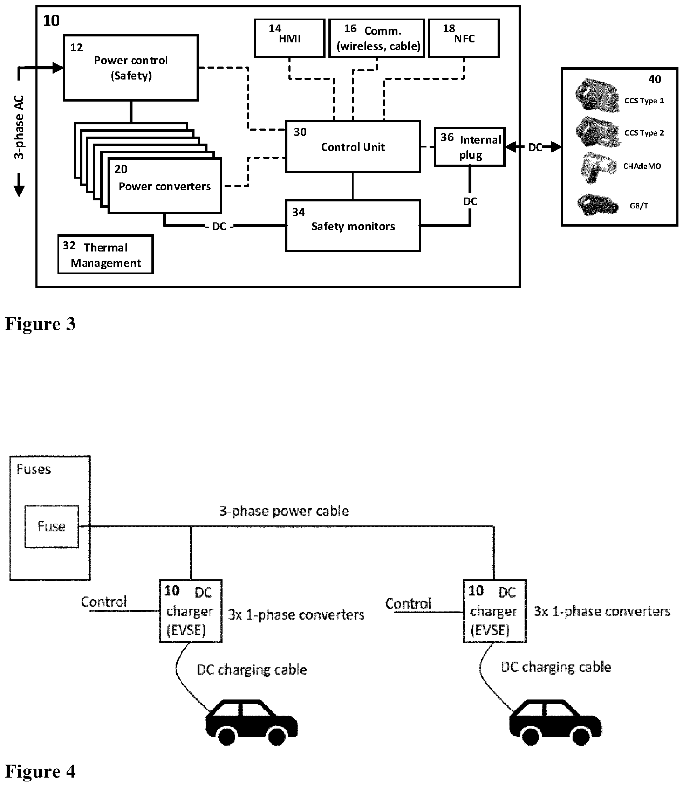

Figure 3 is a block diagram showing an example of an implementation of a power management assembly 10 according to the invention. The figure shows the different elements comprised in the power management assembly 10 as well as additional elements that may be included.

In the example shown in figure 3, the power management assembly 10 is connected to a 3-phase AC power grid. A power control 12, which may or may not be part of the power management assembly 10 provides safety measures for the 3-phase AC power. The power control 12 may typically comprise safety installations such as fuses and/or residual-current device (RCD) protecting against overload or residual-current as well as energy meter for measuring current load of each phase.

Each phase of the 3-phase AC power grid is connected to at least one power converter 20 as well as to a control unit 30. The power converter 20 may comprise one having a specific capacity, or several each with less capacity but when connected in parallel have higher capacity. By using several power converters 20 for each phase, the power management assembly 10 will still work if one of the power converter 20 fails.

By having power converters 20 that are modular, the capacity can be adapted according to power needs, e.g. increasing the capacity by adding more modules of power converters 20.

By for instance having two similar 11kW power modules electrically connected in parallel to each phase, the capacity of a power converter 20 is doubled to 22kW. If one of the power modules fails, the power converter 20 will still function, although then with half the capacity. In figure 3, a total of six power modules are indicated, i.e. two power modules are connected in parallel and to each phase.

Each power converter 20 comprises a controllable current limiting device. Power converters 20 are connected to and controlled from the control unit 30 which is adapted for controlling and setting current load of each power converter 20 according to, among other factors, a power request of a connected electric vehicle to be charged. In this way, current drawn from or delivered to each phase of the AC power grid, i.e. current flowing through each power converter 20 is controlled. The power converters 20 are preferably isolated.

The control unit 30 is further connected to communication means 16 enabling it to be remotely operated. The communication means 16 may be wired and/or wireless for enabling communication between the control unit 30 of the power converters 20. Communication can be performed by means of any known type such as for instance Ethernet, WiFi, 4G, 5G, Bluetooth or power line communication (PLC).

The communication to the control unit 30 may comprise instruction of whether power is to be delivered to a connected battery for charging it or drawn from it as well as current load to be set on each power converter 20. Power management of a battery may for instance be performed via an application (App) installed on a smart phone communicating with the control unit 30 via 4G or 5G. The App may receive updated information of battery status from the control unit 30, current load on each phase, present power prices etc. Based on this, the App can control power flow between a battery of an EV and a connected 3-phase power grid.

In addition to remote operation or as an alternative, local operation is implemented in one embodiment of the power management assembly 10. In this embodiment, the control unit 30 is connected to an interface enabling interaction with the power converters 20. A user can then via the interface receive information of available power in each phase and input how much power to use for charging a battery or deliver from the battery back to a 3-phase power grid.

The power management assembly 10 in figure 3 shows some additional modules that may be included. One or more modules provide interface for interacting with the power management assembly 10, e.g. a human machine interface (HMI) module 14 and near field communication (NFC) module 18. An HMI interface enables direct interaction with the power converters 20 of the power management assembly 10 at the location where it is installed. The HMI interface may for instance be one or more of the following: a keyboard, touch screen, voice operated interface.

NFC or RFID can be used together with one of the mentioned examples of interfaces. NFC may for instance be used for providing access to and enabling operation of the power management assembly 10. NFC may further be used as a method for contactless payment of power used when charging an electric vehicle.

Other modules provide safety functions to the power management assembly 10, e.g. the power control 12 mentioned above, thermal management 32 for controlling temperature inside a housing of the power management assembly 10, and safety monitors 34.

All above described devices comprised in the power management assembly 10 are installed in a suitable housing having AC- and DC-terminals (internal plug 36) for connection to a 3-phase power grid and a DC-cable with a suitable charging plug 40 adapted for connection to a corresponding socket in an EV, e.g. CCS Type 1 or 2, CHAdeMO, GB/T etc.

Thermal management 32 is included in the power management assembly 10 shown in the figure. This typically comprises a temperature-controlled fan for driving heat out of a housing where the power management assembly 10 is installed.

Figure 4 is a schematic showing two EV's connected to power management assemblies 10 (marked as DC charger) according to the invention. The chargers are connected to the same 3-phase power cable and fuse circuit.

By using the power management assembly 10 according to the invention, optimal utilization and distribution of available power to and from batteries of EV's are enabled. By ensuring that each phase of a connected 3-phase power grid is carrying same power, load balancing is achieved. Load balancing can also be achieved if only one power management assembly 10 according to the invention is connected to same 3-phase power cable as ordinary 1-phase or 3-phase chargers where these are loading each phase differently.

In the following, an example of how a power management assembly 10 is operated and how it works is described.

AC-terminals of the power management assembly 10 are connected to a power grid via a 3-phase power cable and DC-terminals of power management assembly 10 is connected to a charging cable with a charging plug adapted to be connected to a corresponding socket of the EV.

Activation and operation of the power management assembly 10 can be performed in different ways, e.g. local operation, remote or automatic operation. How it is operated is typically based on where it is installed and if it is for private or public use.

For private use, the power management assembly 10 may for instance be operated remotely via an App installed on a smart phone. Secure access to the App can be provided by known means such as for instance finger print or face recognition. From the App a user may set which mode that is to be used and when the power management assembly 10 is to be operative.

The power management assembly 10 can be instructed, via the communication means 16 communicating with the control unit 30, to change between different modes of the power management assembly 10 according to a time schedule in of a 24-hours period and/or according to current electricity prices.

In one mode, power flows from the 3-phase power grid to the battery for charging it. This is preferably when the current electricity price is low. In another mode, power flows from the battery back to the 3-phase power grid thereby delivering power to the grid. This is favorable when the electricity price is high. The App can be continuously updated with present electricity prices and based on this, as well as charge status and required charge of the battery, determine which mode is to be set. When the power management assembly 10 is activated for use, the present load on each phase of the connected 3-phase power grid is established and based on this the control unit 30 instructs the power converters 20 to set a desired current drawn from or delivered to each phase of the AC power grid.

As an example, a 3-phase AC power cable is connected to a power grid having a maximum power capacity of 63 Ampere in each phase (protected by 63A fuses on each phase). It is detected that each phase is loaded differently, e.g. L1: 11A, L2: 9A and L3: 14A. It is decided that a battery is to be charged as fast as possible. The power convertors 20 are then set to draw a current of 52A, 54A and 49A respectively on each phase resulting in load balance of the phases and optimal use of available power.

When other chargers or power managing assemblies are connected to the same power line, the present set current drawn or delivered to each phase of the AC power grid is reset and set with new values based on new loading information.

For public use, access to a charging station, with the power managing assembly 10 according to the invention, can be given by near field communication, e.g. swiping a NFC card or NFC enabled smart phone close to a NFD reader of the power managing assembly. This may also be used when paying for power used.

In the following, the invention will be explained by way of some examples and in view of prior art.

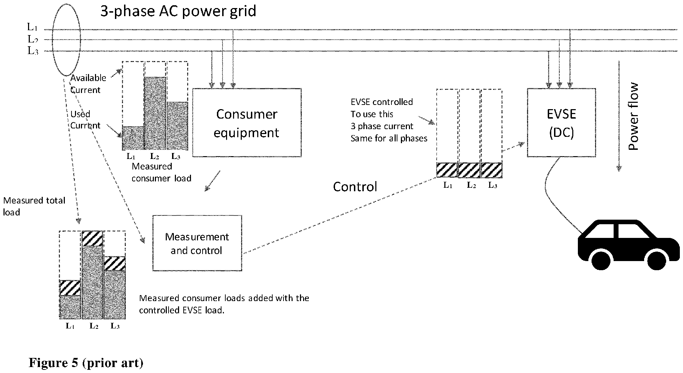

Figure 5 illustrates an example where a prior art DC power assembly (EVSE) is connected to a 3-phase AC power grid supplying power to a house and to an EV for charging its traction battery. Different 1-phase consumer equipment is normally connected to and drawing power from one of the phases, resulting in lopsided load and unbalanced phases.

A measurement and control unit measures load on each phase L₁, L₂ and L₃ in view of available current. The figure shows that phase L2 has the least available power. The remaining available power of this phase will control the current to be delivered to all phases of the EVSE since the DC charger is controlled by setting same load on each phase of a 3-phase power supply. The total available power is thus not efficiently utilized, i.e. all power in phase L2 is utilized but not the power available in phase L₁ and L₃.

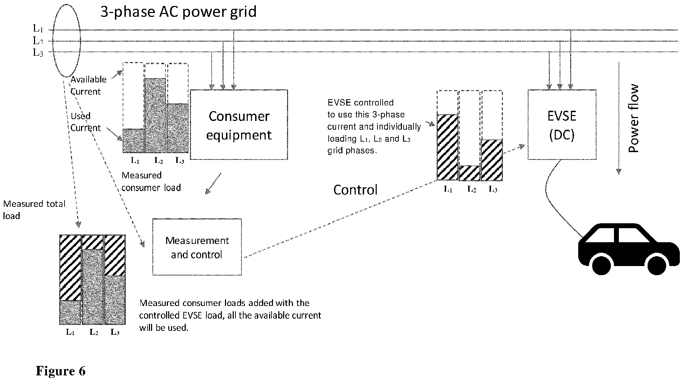

Figure 6 shows an example where a DC power management assembly (EVSE) according to the invention is connected to same 3-phase AC power grid as described above with reference to figure 5. An energy meter (measurement and control) is establishing the present load of each phase L₁, L₂ and L₃. The energy meter may be a device internal in the EVSE or external to this, e.g. in a house of a consumer where the 3-phase AC power is available. The energy meter measures the three voltages and currents on each phase of the 3-phase AC power supply. The load distribution information of each of the three phases is used to program the inventive DC power management assembly (EVSE) by individually setting the allowed current drawn from each phase L₁, L₂ and L₃ such that all the available power of the AC power grid is utilized. As shown in the figure, each phase is efficiently utilized resulting in more efficient and faster charging of the EV.

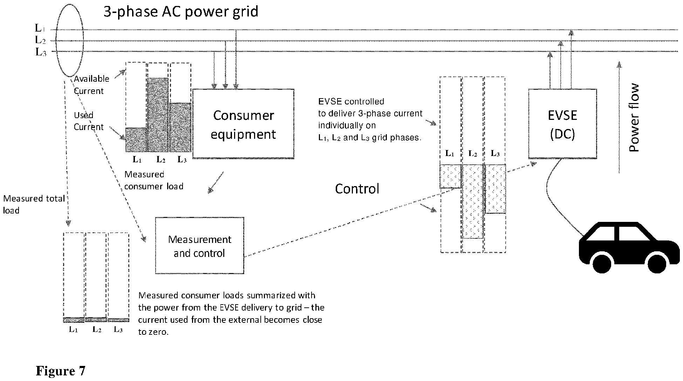

Figure 7 shows an example where the DC power management assembly (EVSE) according to the invention is used as a bidirectional charging system where it is possible not only to charge the EV but also use it to deliver power back to the 3-phase AC grid from the battery of the EV. By delivering AC power independently per phase to the AC power grid of a house/building, uneven phase load distribution can be equalized effectively.

The figure indicates that power is flowing from the EV to the AC power grid. Individual current control is performed by the EVSE per phase allowing it to deliver power to each phase according to needs. In this example the load on phase L2 is about 80% of the power available, while the phases L₁ and L₃ are loaded about 25% and 50% respectively. This information is input to the control unit of the DC power management assembly which then can adjust the power converters to deliver different amount of power to each phase, i.e. in this case 75% to phase L₁, 20% to phase L2 and 50% to phase L3. The result of this is that total load balance on the 3-phase AC power grid is close to zero.

By using the DC power management assembly as a bidirectional charging system, a car battery can be charged when power prices are low, e.g. at night, and discharged for delivering power back to the AC power grid when power prices are high, e.g. at day time.

DC power management assembly 10 according to the invention may be an independent device installed for instance where an EV is parked or it may be integrated as an onboard charger in the EV.

From the description above, a skilled person will understand that the power managing assembly 10 according to the invention can also be used for controlling power to and from battery power banks installed in for instance private homes for cost effective use of power.

When the power management assembly 10 is installed and connected between a 3-phase AC power source and a battery it can be configured for achieving load balance on all three phases of the AC power source as well as providing optimal use of available power.

By having total control of energy flow to and from a 3-phase AC power grid, the invention provides a flexible and cost-efficient solution for managing power. By for instance connecting several power management assemblies 10 to the same AC power grid, they can be controlled such that one is delivering power to the grid while another is using power from the grid. If this is combined with regular 1-phase and/or 3-phase AC chargers, imposing load unbalance, an unbalanced power grid can become balanced by delivering/retrieving different amounts of power to/from each phase.

## Claims

1. A power management assembly (10) for DC charging of a battery of an electric vehicle and for controlling power flow to and from the battery and a connected 3-phase AC power grid, comprising:
- separate controllable power converters (20) connected to each phase of the 3-phase AC power grid and to a common DC terminal for connection to a DC charging port of the electric vehicle;
- a control unit (30) connected to each power converter (20) where the control unit (30) is adapted for setting and controlling current drawn from or delivered to each phase of the AC power grid;
- communication means (16) connected to the control unit (30) enabling remote operation of the control unit (30).

2. The power management assembly (10) according to claim 1, wherein each power converter (20) comprises a controllable current limiting device.

3. The power management assembly (10) according to claim 1 or 2, wherein the power converters (20) connected to each phase of the 3-phase AC power grid comprises two or more power converters connected in parallel.

4. The power management assembly (10) according to any of the previous claims, wherein the control unit (30) comprises an interface for interacting with each power converter (20).

5. The power management assembly (10) according to claim 4, wherein the interface is human machine interface (HMI).

6. The power management assembly (10) according to claim 4 or 5, wherein the interface comprises an NFC device.

7. The power management assembly (10) according to any of the previous claims, wherein the communication means (16) comprises one or more of WiFi, Ethernet, 4G, 5G, Bluetooth, PLC.

8. A method for DC charging of a battery of an electric vehicle and for controlling power flow to and from the battery and a connected 3-phase AC power grid by:
- providing a power management assembly (10) comprising a separate power converter (20) for each phase of the 3-phase AC power grid, where each power converter (20) is connected to a control unit (30) and where the control unit (30) is adapted for controlling and setting current drawn from or delivered to each phase of the AC power grid, and where communication means (16) are connected to the control unit (30) for enabling remote operation of the control unit (30);
- connecting a power converter (20) to each phase of the AC power grid,
- connecting a power converter (20) to a DC charging port of the electric vehicle;
- establishing present current load information of each phase of the 3-phase AC power grid;
- controlling each power converter (20) by means of the control unit (30) by generating control instructions to each power converter (20) for adjusting current drawn from or delivered to each phase of the AC power grid.

9. The method according to claim 8, where the control instructions for adjusting current drawn from or delivered to each phase of the AC power grid are based on capacity and present load on each phase.

10. The method according to claim 8 or 9, where the control instructions for adjusting current drawn from or delivered to each phase of the AC power grid are based on capacity and present load on each phase of the 3-phase AC power grid as well as anticipated energy demands.

11. The method according to any of the claims 8 to 10, where the control instructions for adjusting current drawn from or delivered to each phase of the AC power grid are adapted for achieving load balance of the phases.

12. A computer program product stored in a memory of a power management assembly (10), comprising computer readable instructions that when executed in a processor performs a method for DC charging of a battery of an electric vehicle and for controlling power flow to and from the battery and a connected 3-phase AC power grid according to any one of claims 8-11.
